(19) **Europäisches Patentamt**
**European Patent Office**
**Office européen des brevets**

(11) **EP 3 674 529 B1**

(12) **EUROPEAN PATENT SPECIFICATION**

(45) Date of publication and mention
of the grant of the patent:
**18.01.2023 Bulletin 2023/03**

(51) International Patent Classification (IPC):
**F02B 75/04** (2006.01)          **F02B 75/32** (2006.01)
**F02D 15/02** (2006.01)          F02B 25/02 (2006.01)

(21) Application number: **18849292.0**

(22) Date of filing: **24.08.2018**

(52) Cooperative Patent Classification (CPC):
**F02B 75/045; F02D 15/02;** F02B 25/02; F02B 75/32

(86) International application number:
**PCT/JP2018/031388**

(87) International publication number:
**WO 2019/039594 (28.02.2019 Gazette 2019/09)**

(54) **VARIABLE COMPRESSION DEVICE, ENGINE SYSTEM, AND PISTON-ROD POSITION ADJUSTMENT METHOD**

VORRICHTUNG MIT VARIABLER KOMPRESSION, MOTORSYSTEM UND VERFAHREN ZUR VERSTELLUNG DER KOLBENSTANGENSTELLUNG

DISPOSITIF DE COMPRESSION VARIABLE, SYSTÈME DE MOTEUR ET PROCÉDÉ DE RÉGLAGE DE POSITION DE TIGE DE PISTON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2017 JP 2017162594**

(43) Date of publication of application:
**01.07.2020 Bulletin 2020/27**

(73) Proprietor: **IHI Corporation**
**Tokyo 135-8710 (JP)**

(72) Inventors:
• **MASUDA, Yutaka**
**Tokyo 135-8710 (JP)**
• **YAMADA, Takayuki**
**Tokyo 135-8710 (JP)**
• **HIROSE, Takayuki**
**Tokyo 135-8710 (JP)**

• **NAKAJIMA, Hayato**
**Tokyo 135-8710 (JP)**
• **YAMADA, Takeshi**
**Tokyo 135-8710 (JP)**

(74) Representative: **TBK**
**Bavariaring 4-6**
**80336 München (DE)**

(56) References cited:
| | |
|---|---|
| **EP-A1- 3 098 416** | **WO-A1-2015/108178** |
| **WO-A1-2015/108182** | **WO-A1-2016/001990** |
| **WO-A1-2017/025580** | **CN-A- 106 089 977** |
| **DE-A1-102009 013 323** | **DE-A1-102016 106 345** |
| **FR-A1- 3 043 720** | **JP-A- 2005 048 621** |
| **JP-A- 2009 047 009** | **JP-A- 2010 031 787** |
| **JP-A- 2014 020 375** | **JP-A- 2016 193 636** |

## Description

Technical Field

The present disclosure relates to a variable compression device according to the preamble of claim 1, a corresponding engine system and a piston-rod position adjustment method according to the preamble of claim 6.

Background Art

For example, Patent Document 1 discloses a large reciprocating piston combustion engine that has a crosshead. The large reciprocating piston combustion engine disclosed in Patent Document 1 is a dual fuel engine that can be operated using both a liquid fuel such as heavy oil and a gaseous fuel such as natural gas. In the large reciprocating piston combustion engine disclosed in Patent Document 1, in order to cope with both a compression ratio suitable for operation using the liquid fuel and a compression ratio suitable for operation using the gaseous fuel, an adjustment mechanism that is configured to change a compression ratio by moving a piston rod using oil pressure is provided in a crosshead portion.

A generic variable compression device according to the preamble of claim 1 and a generic piston-rod position adjustment method according to the preamble of claim 6 are shown by each of the Patent Documents 2 to 4.

Document of Related Art

Patent Documents

    [PatentDocument 1] JP 2014 020375 A
    [Patent Document 2] EP 3 098 416 A
    [Patent Document 3] CN 106 089 977 A
    [Patent Document 4] FR 3 043 720 A1

Summary of Invention

Technical Problem

In an engine system according to Patent Document 1 including the above-described compression adjustment device that changes a compression ratio, the position of a piston rod in a moving direction is changed to change the positions of a bottom dead center and a top dead center of a piston, thereby adjusting a compression ratio. The adjustment of such a compression ratio is performed by a control device of the engine system on the basis of the operation of an operator, or the like. However, the control device does not ascertain the position of the piston rod, and thus it is difficult to accurately adjust a compression ratio.

The present disclosure is made in consideration of the above-described circumstances, and an object thereof is to accurately adjust a compression ratio in a control device that controls the position of a piston rod of an engine.

Solution to Problem

The object is achieved by a variable compression device having the features of claim 1, by a corresponding engine system according to claim 5, and by a piston-rod position adjustment method having the features of claim 6.

A variable compression device according to the present invention is configured to change a compression ratio in a combustion chamber of an engine, and includes: a piston rod; a fluid chamber which is configured to move the piston rod in a direction in which a compression ratio is increased by supplying a boosted working fluid thereto; a boosting mechanism which is configured to boost the working fluid and supplies the boosted working fluid to the fluid chamber; a detection unit of which at least a portion is provided to the piston rod, and which detects displacement of a position of the piston rod and outputs a signal including positional information of the piston rod; and a controller which is configured to control the boosting mechanism on the basis of the positional information.

In the variable compression device according to the present invention, the detection unit includes a rod, a biasing portion which is provided between the rod and a large diameter portion provided in a lower end portion of the piston rod, and a sensor portion that is configured to detect movement of the rod in a non-contact manner, and the rod is pressed against the large diameter portion by the biasing portion.

In a preferred variable compression device, the rod may be disposed in a moving direction of the piston rod.

In a preferred variable compression device, the detection unit may include a magnetic member provided to the rod, and the sensor portion may be a magnetic sensor that is configured to detect a change in a magnetic field.

The variable compression device may preferably include an information transmission unit which is configured to transmit the positional information acquired from the detection unit to the controller.

An engine system according to the present invention includes the variable above-described compression device.

A piston-rod position adjustment method according to the present invention is a piston-rod position adjustment method of moving a piston rod in a direction in which a compression ratio in a combustion chamber of an engine is increased by supplying a working fluid to a fluid chamber and includes: a position acquisition step of acquiring positional information of the piston rod; and a pressure adjustment step of adjusting a pressure of supply of the working fluid on the basis of the positional information.

In a preferred piston-rod position adjustment method, the position acquisition step may include calculating a position of the piston rod on the basis of a cylinder internal pressure at a top dead center of the combustion chamber and a cylinder internal pressure at a bottom dead center of the combustion chamber.

In a preferred piston-rod position adjustment method, the position acquisition step may include acquiring positional information of the piston rod on the basis of a signal including the positional information acquired by the detection unit.

Effects of Invention

According to the present invention, a detection unit outputs a signal including positional information of a piston rod in a moving direction, and a controller acquires the positional information of the piston rod, and adjusts the position of the piston rod on the basis of the positional information. Thereby, the controller can monitor whether or not the position of the piston rod in the moving direction matches a target position of the piston rod and can accurately adjust the position of the piston rod in the moving direction. Further, it is possible to reduce the number of times a boosting mechanism is driven by accurately ascertaining the position of the piston rod.

Brief Description of Drawings

Fig. 1 is a cross-sectional view of an engine system in an embodiment of the present disclosure.
Fig. 2 is a perspective view showing a portion of the engine system in the embodiment of the present disclosure.
Fig. 3 is a schematic cross-sectional view showing a portion of the engine system in the embodiment of the present disclosure.

Description of Embodiment and Comparative Example

Hereinafter, an embodiment of an engine system 100 in the present disclosure will be described with reference to the accompanying drawings.

[Embodiment]

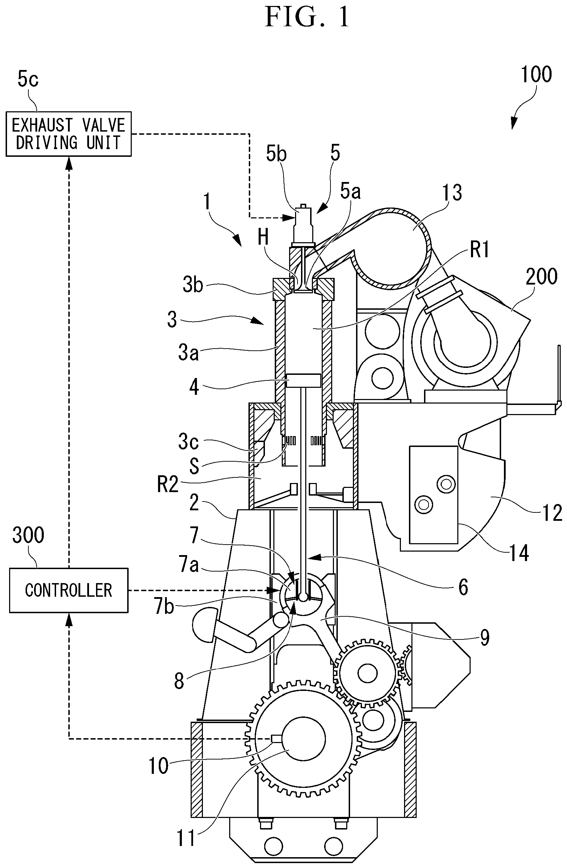

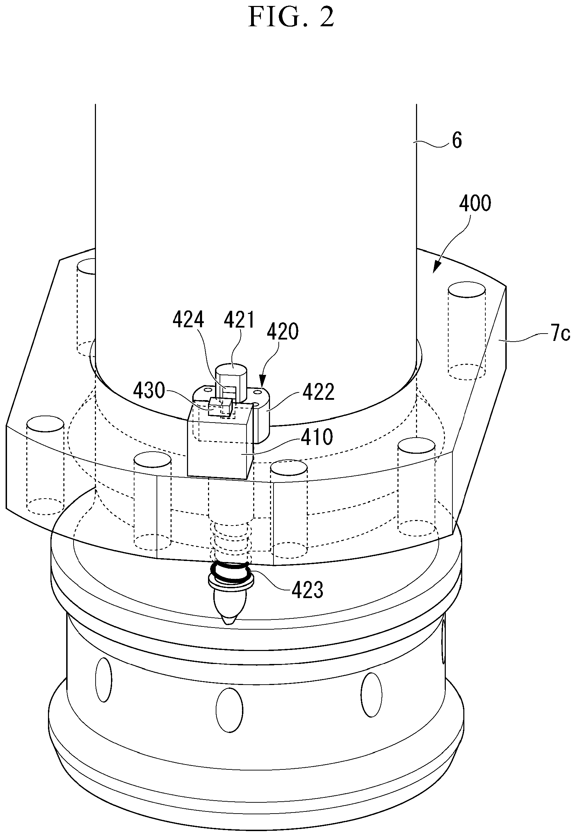

The engine system 100 of the present embodiment is mounted in a ship such as a large tanker, and includes an engine 1, a supercharger 200, a controller 300, and a position detection unit 400 (see Fig. 2, a detection unit) as shown in Fig. 1. Meanwhile, in the present embodiment, description will be given by regarding the supercharger 200 as an auxiliary device and providing the supercharger 200 as a separate body from the engine 1 (main device). However, the supercharger 200 may be configured as a part of the engine 1.

The engine 1 is a multi-cylinder uniflow scavenging diesel engine. The engine 1 has a gas operation mode in which a gaseous fuel such as natural gas is burned together with a liquid fuel such as heavy oil, and a diesel operation mode in which a liquid fuel such as heavy oil is burned. Meanwhile, in the gas operation mode, only a gaseous fuel may be burned. The engine 1 includes a frame 2, a cylinder portion 3, a piston 4, an exhaust valve unit 5, a piston rod 6, a crosshead 7, a hydraulic portion 8 (boosting mechanism), a connecting rod 9, a crank angle sensor 10, a crank shaft 11, a scavenging reservoir 12, an exhaust reservoir 13, and an air cooler 14. In addition, a cylinder is constituted by the cylinder portion 3, the piston 4, the exhaust valve unit 5, and the piston rod 6.

The frame 2 is a strength member that supports the entire engine 1, and accommodates the crosshead 7, the hydraulic portion 8, and the connecting rod 9 therein. In addition, a crosshead pin 7a to be described later of the crosshead 7 can be reciprocated inside the frame 2.

The cylinder portion 3 includes a cylindrical cylinder liner 3a, a cylinder head 3b, and a cylinder jacket 3c. The cylinder liner 3a is a cylindrical member. A sliding surface with respect to the piston 4 is formed on the inner side (inner circumferential surface) of the cylinder liner 3a. A space surrounded by the inner circumferential surface of the cylinder liner 3a and the piston 4 is a combustion chamber R1. In addition, a plurality of scavenging ports S are formed in a lower portion of the cylinder liner 3a. The scavenging ports S are openings which are arranged along the circumferential surface of the cylinder liner 3a and make a scavenging chamber R2 inside the cylinder jacket 3c and the inner side of the cylinder liner 3a communicate with each other. The cylinder head 3b is a lid member provided in an upper end portion of the cylinder liner 3a. An exhaust port H is formed in the central portion of the cylinder head 3b when seen in a plan view, and is connected to the exhaust reservoir 13. In addition, a fuel injection valve (not shown) is provided in the cylinder head 3b. Further, a cylinder internal pressure sensor (not shown) is provided in the vicinity of the fuel injection valve of the cylinder head 3b. The cylinder internal pressure sensor detects a pressure in the combustion chamber R1 and transmits the detected pressure to the controller 300. The cylinder jacket 3c is a cylindrical member which is provided between the frame 2 and the cylinder liner 3a and into which a lower end portion of the cylinder liner 3a is inserted. The scavenging chamber R2 is formed inside the cylinder jacket 3c. In addition, the scavenging chamber R2 of the cylinder jacket 3c is connected to the scavenging reservoir 12.

The piston 4 having a substantially columnar shape is connected to the piston rod 6 to be described later and disposed on the inner side of the cylinder liner 3a. In addition, a piston ring (not shown) is provided on the outer circumferential surface of the piston 4, and a gap between the piston 4 and the cylinder liner 3a is sealed by the piston ring. The piston 4 slides inside the cylinder liner 3a together with the piston rod 6 due to a fluctuation in pressure in the combustion chamber R1.

The exhaust valve unit 5 includes an exhaust valve 5a, an exhaust valve casing 5b, and an exhaust valve driving unit 5c. The exhaust valve 5a is provided on the inner side of the cylinder head 3b and closes the exhaust port H in the cylinder portion 3 by the exhaust valve driving unit 5c. The exhaust valve casing 5b is a cylindrical housing that accommodates an end portion of the exhaust valve 5a. The exhaust valve driving unit 5c is an actuator that moves the exhaust valve 5a in a direction parallel to a stroke direction of the piston 4.

The piston rod 6 is an elongate member having one end connected to the piston 4 and the other end coupled to the crosshead pin 7a. An end portion of the piston rod 6 is inserted into the crosshead pin 7a, and the connecting rod 9 is rotatably coupled to the crosshead pin 7a. In addition, a portion of an end portion (lower end portion) of the piston rod 6 on the crosshead pin 7a side has a large diameter portion formed to have a large diameter.

The crosshead 7 includes the crosshead pin 7a, a guide shoe 7b, and a lid member 7c. The crosshead pin 7a is a columnar shape member that movably connects the piston rod 6 and the connecting rod 9 to each other. A hydraulic chamber R3 (fluid chamber) to and from which hydraulic oil (working fluid) is supplied and discharged is formed in an insertion space of the crosshead pin 7a where the end portion of the piston rod 6 is inserted. An outlet hole O penetrating the crosshead pin 7a in the axial direction of the crosshead pin 7a is formed on a side lower than the center of the crosshead pin 7a. The outlet hole O is an opening through which cooling oil having passed through a cooling flow passage (not shown) of the piston rod 6 is discharged. In addition, the crosshead pin 7a is provided with a supply flow passage R4 that connects the hydraulic chamber R3 and a plunger pump 8c to be described later to each other, and a relief flow passage R5 that connects the hydraulic chamber R3 and a relief valve 8f to be described later to each other. Further, in the crosshead 7, an auxiliary flow passage R6 that makes the crosshead pin 7a and the lid member 7c communicate with each other and opens on the circumferential surface of the lid member 7c and the circumferential surface of the crosshead pin 7a is formed.

The guide shoe 7b rotatably supports the crosshead pin 7a. The guide shoe 7b moves, on a guide rail (not shown), in the stroke direction of the piston 4 in association with the crosshead pin 7a. The guide shoe 7b moves along the guide rail, so that the crosshead pin 7a is regulated with respect to movement other than a rotational motion and movement in a linear direction parallel to the stroke direction of the piston 4. The lid member 7c is an annular member which is fixed to an upper portion of the crosshead pin 7a and into which the end portion of the piston rod 6 is inserted. The crosshead 7 transmits a linear motion of the piston 4 to the connecting rod 9.

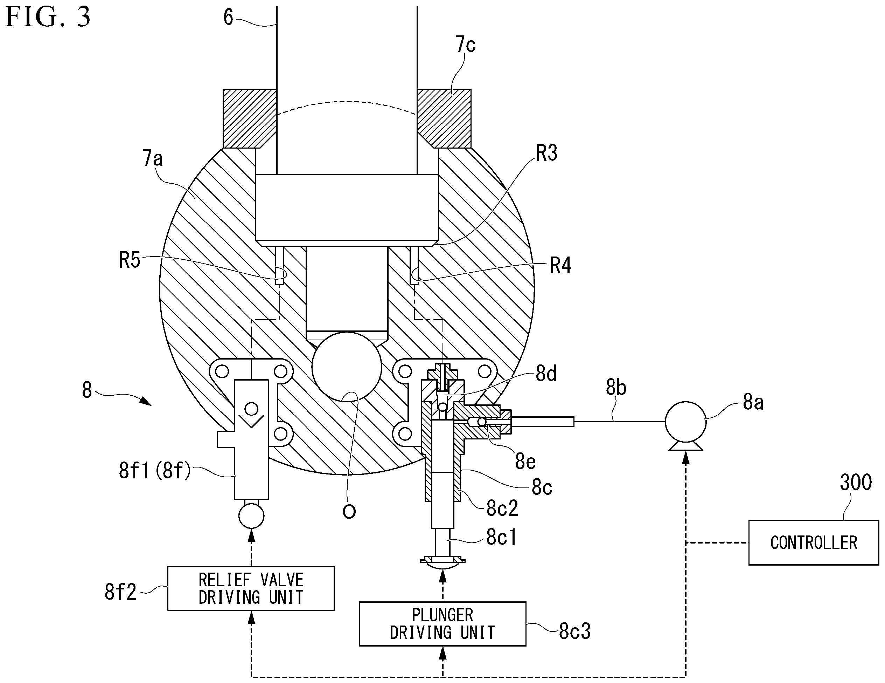

As shown in Fig. 3, the hydraulic portion 8 includes a supply pump 8a, an oscillating pipe 8b, the plunger pump 8c, a first check valve 8d and a second check valve 8e included in the plunger pump 8c, and the relief valve 8f. In addition, the piston rod 6, the crosshead 7, the hydraulic portion 8, the controller 300, and the position detection unit 400 function as a variable compression device in the present disclosure.

The supply pump 8a boosts hydraulic oil supplied from a hydraulic oil tank (not shown) and supplies the boosted hydraulic oil to the plunger pump 8c on the basis of an instruction received from the controller 300. The supply pump 8a is driven using power of a battery of the ship and can be operated before a liquid fuel is supplied to the combustion chamber R1. The oscillating pipe 8b connects the supply pump 8a and the plunger pump 8c of each cylinder to each other. The oscillating pipe 8b is slidable between the plunger pump 8c moving in association with the crosshead pin 7a and the fixed supply pump 8a.

The plunger pump 8c is fixed to the crosshead pin 7a. The plunger pump 8c includes a rod-shaped plunger 8c1, a tubular cylinder 8c2 that slidably accommodates the plunger 8c1, and a plunger driving unit 8c3. In the plunger pump 8c, the plunger 8c1 slides inside the cylinder 8c2 by a driving unit (not shown) connected to the plunger 8c1, thereby boosting hydraulic oil and supplying the boosted hydraulic oil to the hydraulic chamber R3. In addition, the first check valve 8d is provided in an opening, on an ejection side of hydraulic oil, which is provided in an end portion of the cylinder 8c2, and the second check valve 8e is provided in an opening, on an injection side of hydraulic oil, which is provided on the side circumferential surface of the cylinder 8c2. The plunger driving unit 8c3 is connected to the plunger 8c1 and reciprocates the plunger 8c1 on the basis of an instruction received from the controller 300.

The first check valve 8d is configured to be closed by a valve body being biased toward the inner side of the cylinder 8c2 and prevents hydraulic oil supplied to the hydraulic chamber R3 from flowing backward to the cylinder 8c2. In addition, the first check valve 8d is opened by the valve body being pressed by hydraulic oil when the pressure of the hydraulic oil in the cylinder 8c2 becomes equal to or higher than a biasing force (valve-opening pressure) of a biasing member of the first check valve 8d. The second check valve 8e is biased toward the outer side of the cylinder 8c2 and prevents the hydraulic oil supplied to the cylinder 8c2 from flowing backward to the supply pump 8a. In addition, the second check valve 8e is opened by the valve body being pressed by hydraulic oil when the pressure of the hydraulic oil supplied from the supply pump 8a becomes equal to or higher than a biasing force (valve-opening pressure) of a biasing member of the second check valve 8e. Meanwhile, the valve-opening pressure of the first check valve 8d is higher than the valve-opening pressure of the second check valve 8e, and the first check valve 8d is not opened by the pressure of hydraulic oil supplied from the supply pump 8a in a normal operation state where the system is operated at a preset compression ratio.

The relief valve 8f is provided in the crosshead pin 7a. The relief valve 8f includes a main body portion 8f1 and a relief valve driving unit 8f2. The main body portion 8f1 is a valve which is connected to the hydraulic chamber R3 and the hydraulic oil tank (not shown). The relief valve driving unit 8f2 is connected to a valve body of the main body portion 8f1 and opens and closes the main body portion 8f1 on the basis of an instruction received from the controller 300. The relief valve 8f is opened by the relief valve driving unit 8f2, so that hydraulic oil stored in the hydraulic chamber R3 is returned to the hydraulic oil tank.

As shown in Fig. 1, the connecting rod 9 is an elongate member which is coupled to the crosshead pin 7a and coupled to the crank shaft 11. The connecting rod 9 converts a linear motion of the piston 4 which is transmitted to the crosshead pin 7a into a rotational motion. The crank angle sensor 10 is a sensor for measuring a crank angle of the crank shaft 11, and transmits a crank pulse signal for calculating a crank angle to the controller 300.

The crank shaft 11, which is an elongate member which is connected to the connecting rod 9 provided in the cylinder, is rotated by rotational motions transmitted to the respective connecting rods 9 to transmit power to, for example, a screw or the like. The scavenging reservoir 12 is provided between the cylinder jacket 3c and the supercharger 200, and air pressurized by the supercharger 200 flows into the scavenging reservoir 12. In addition, the air cooler 14 is provided inside the scavenging reservoir 12. The exhaust reservoir 13 is a tubular member which is connected to the exhaust port H of each cylinder and connected to the supercharger 200. A gas discharged from the exhaust port H is temporarily stored in the exhaust reservoir 13 and is thus supplied to the supercharger 200 in a state where pulsation is suppressed. The air cooler 14 cools air inside the scavenging reservoir 12.

The supercharger 200 pressurizes air suctioned from an intake port (not shown) and supplies the pressurized air to the combustion chamber R1 by a turbine which is rotated by a gas discharged from the exhaust port H.

The controller 300 is a computer that controls the amount of fuel to be supplied, and the like on the basis of an operation of an operator of the ship, or the like. The controller 300 includes a reception unit that receives wireless communication of a communication unit 430 of the position detection unit 400 which will be described later. In addition, the controller 300 changes a compression ratio in the combustion chamber R1 by controlling the hydraulic portion 8. Specifically, the controller 300 acquires positional information of the piston rod 6 on the basis of a signal received from the position detection unit 400, and controls the plunger pump 8c, the supply pump 8a, and the relief valve 8f to adjust the amount of hydraulic oil in the hydraulic chamber R3, thereby changing the position of the piston rod 6 to change a compression ratio.

As shown in Figs. 2 and 3, the position detection unit 400 includes a magnetic sensor 410 (sensor portion), a rod portion 420, and the communication unit 430 (information transmission unit). The magnetic sensor 410 is fixed to the lid member 7c. The magnetic sensor 410 generates an electrical signal (a signal including positional information of the piston rod 6) due to a change in a magnetic field accompanying the movement of a rod 421 to be described later.

The rod portion 420 includes the rod 421, a holding portion 422, a biasing spring 423 (biasing portion), and a magnetic member 424. The rod 421 is a rod-shaped member which includes a flange that is provided in the vicinity of the end portion thereof and holds the biasing spring 423. The rod 421 is inserted into a through hole formed in the holding portion 422 and a through hole formed in the lid member 7c, is disposed in an extension direction of the piston rod 6, and is pressed against the large diameter portion of the lower end portion of the piston rod 6 by the biasing spring 423. That is, the rod 421 abuts an upper surface of the large diameter portion of the piston rod 6 when the piston rod 6 is pushed up by oil pressure. The holding portion 422 is a tubular member which is fixed to the lid member 7c and into which the rod 421 is inserted. The rod 421 is capable of reciprocating inside the holding portion 422. The biasing spring 423 is provided between the flange of the rod 421 and the large diameter portion of the piston rod 6 and biases the rod 421 toward the large diameter portion of the piston rod 6. The magnetic member 424 includes a plurality of magnets arranged at equal intervals and is provided, in an extension direction of the rod 421, on the circumferential surface of the rod 421.

The communication unit 430 is a telemeter that transmits an electrical signal detected by the magnetic sensor 410 to the controller 300 through wireless communication.

The engine system 100 causes the piston 4 to slide within the cylinder liner 3a to rotate the crank shaft 11 by igniting and exploding fuel injected into the combustion chamber R1 from the fuel injection valve (not shown). In detail, the fuel supplied to the combustion chamber R1 is mixed with air flowing from the scavenging port S and is then compressed due to the movement of the piston 4 in a direction of a top dead center, which results in a rise in temperature and spontaneous ignition. Further, in the case of a liquid fuel, the liquid fuel is vaporized due to a rise in temperature in the combustion chamber R1 and is spontaneously ignited.

In addition, the fuel in the combustion chamber R1 is rapidly expanded by spontaneous ignition, and a pressure directed in a direction of a bottom dead center is applied to the piston 4. Thereby, the piston 4 moves in the direction of the bottom dead center, the piston rod 6 is moved in association with the piston 4, and the crank shaft 11 is rotated via the connecting rod 9. Further, the piston 4 is moved to the bottom dead center, so that pressurized air flows into the combustion chamber R1 from the scavenging port S. The exhaust port H is opened due to the exhaust valve unit 5 being driven, and an exhaust gas in the combustion chamber R1 is pushed out to the exhaust reservoir 13 by pressurized air.

In a case where a compression ratio is increased, the controller 300 drives the supply pump 8a to supply hydraulic oil to the plunger pump 8c. In addition, the controller 300 drives the plunger pump 8c to pressurize hydraulic oil to a pressure capable of lifting the piston rod 6, and supplies the pressurized hydraulic oil to the hydraulic chamber R3. The end portion of the piston rod 6 is lifted by the pressure of the hydraulic oil in the hydraulic chamber R3, and accordingly, the position of the top dead center of the piston 4 is moved upward (to the exhaust port H side).

In a case where a compression ratio is decreased, the controller 300 drives the relief valve 8f to make the hydraulic chamber R3 and the hydraulic oil tank (not shown) communicate with each other. The load of the piston rod 6 is applied to the hydraulic oil in the hydraulic chamber R3, and the hydraulic oil in the hydraulic chamber R3 is pushed out to the hydraulic oil tank through the relief valve 8f. Thereby, the hydraulic oil of the hydraulic chamber R3 is reduced, and the piston rod 6 is moved downward (to the crank shaft 11 side), thereby moving the position of the top dead center of the piston 4 downward.

Next, a method of adjusting the position of the piston rod 6 in the present embodiment will be described.

When the rod 421 is moved in association with the movement of the piston rod 6, the magnetic member 424 is moved, and thus a magnetic field detected by the magnetic sensor 410 is changed. The magnetic sensor 410 outputs such a change in the magnetic field as an electrical signal. The communication unit 430 transmits the electrical signal of the magnetic sensor 410 to the controller 300.

The controller 300 receives the electrical signal of the magnetic sensor 410 and acquires the position of the piston rod 6 from the position of the rod 421 which is calculated on the basis of the electrical signal (position acquisition step). In addition, the controller 300 compares a target compression ratio with an actual compression ratio on the basis of the position of the piston rod 6. In a case where the actual compression ratio is different from the target compression ratio, the controller 300 controls the hydraulic portion 8 to control the amount of boosting of hydraulic oil (supply pressure) or discharge the hydraulic oil in the hydraulic chamber R3 until the actual compression ratio becomes the target compression ratio (pressure adjustment step).

According to the engine system 100 and the method of adjusting the position of the piston rod 6 in the present embodiment, a signal including positional information of the piston rod 6 in a moving direction is output by the position detection unit 400. The controller 300 acquires the positional information of the piston rod 6, and adjusts the position of the piston rod 6 on the basis of the positional information. Thereby, the controller 300 can monitor whether or not the position of the piston rod 6 in the moving direction matches a target position of the piston rod 6 and can accurately adjust the position of the piston rod 6 in the moving direction. Further, it is possible to reduce the number of times the plunger pump 8c and the relief valve 8f of the hydraulic portion 8 are driven by accurately ascertaining the position of the piston rod 6.

In addition, according to the engine system 100 in the present embodiment, the position detection unit 400 includes the rod 421 that moves together with the piston rod 6 and the magnetic sensor 410 that detects the movement of the rod 421. Thereby, the magnetic sensor 410 can acquire positional information of the piston rod 6 in a non-contact manner without directly performing processing on the piston rod 6.

In addition, according to the engine system 100 in the present embodiment, the rod 421 is disposed in the moving direction of the piston rod 6. Thereby, it is possible to provide the magnetic member 424 to be detected by the magnetic sensor 410 in a longitudinal direction of the rod 421 and to acquire positional information of the piston rod 6 while minimizing the size of the rod 421.

Further, in the present embodiment, the position detection unit 400 generates a signal including positional information of the piston rod 6 by the magnetic sensor 410. The magnetic sensor 410 can measure the position of the piston rod 6 in a state where the magnetic sensor 410 is not in contact with the piston rod 6 that repeatedly reciprocates. Further, the magnetic sensor 410 has a simple structure and can perform measurement even on an area which is likely to be set at a high temperature like the engine 1.

Further, in the present embodiment, the communication unit 430 is provided, and thus the electrical signal output by the position detection unit 400 can be transmitted to the controller 300 located at a separate position. Thereby, the controller 300 can be installed in the engine 1 to be separated from the position detection unit 400.

Further, in the present embodiment, the rod 421 is pressed against the piston rod 6 by the biasing spring 423. Thereby, the rod 421 can be easily attached to the existing piston rod 6 without processing the piston rod 6.

[Comparative example which is useful for understanding the present invention]

A modification example of the embodiment will be described as a comparative example. Meanwhile, members of the same configurations as those in the embodiment will be denoted by the same reference numerals and signs, and the description thereof will be omitted.

The engine system 100 in the present comparative example does not include the position detection unit 400. In such a configuration, the controller 300 calculates an actual compression ratio on the basis of a pressure in the combustion chamber R1 which is calculated from a signal received from a cylinder internal pressure sensor and adjusts the position of the piston rod 6.

In a case where a cylinder internal pressure when the piston 4 is positioned at the bottom dead center is defined as Po and a cylinder internal pressure when the piston 4 is positioned at the top dead center is defined as Pi, a compression ratio $\varepsilon$ is represented by the following Expression 1. Meanwhile, $\kappa$ indicates a polytropic index.

$$\varepsilon = \left(\frac{P_1}{P_0}\right)^{\frac{1}{\kappa}} \qquad (1)$$

The controller 300 calculates a compression ratio in the cylinder portion 3 on the basis of Expression 1 above from the signal output by the cylinder internal pressure sensor. Further, the controller 300 calculates the position of the piston rod 6 from the calculated compression ratio (position acquisition step). In addition, the controller 300 compares a target compression ratio with an actual compression ratio on the basis of the position of the piston rod 6. In a case where the actual compression ratio is different from the target compression ratio, the controller 300 controls the hydraulic portion 8 to control the amount of boosting of hydraulic oil or discharge the hydraulic oil in the hydraulic chamber R3 until the actual compression ratio becomes the target compression ratio (pressure adjustment step).

According to a method of adjusting the position of the piston rod 6 in the present comparative example, a cylinder internal pressure (a signal including positional information of the piston rod 6 in the moving direction) is output to the controller 300 by the cylinder internal pressure sensor. The controller 300 acquires the positional information of the piston rod 6, and adjusts the position of the piston rod 6 on the basis of the positional information. Thereby, the controller 300 can monitor whether or not the position of the piston rod 6 in the moving direction matches a target position of the piston rod 6 and can accurately adjust the position of the piston rod 6 in the moving direction. Further, it is possible to reduce the number of times the plunger pump 8c and the relief valve 8f of the hydraulic portion 8 are driven by accurately ascertaining the position of the piston rod 6.

In addition, the controller 300 can acquire an accurate compression ratio by calculating a compression ratio on the basis of the signal received from the cylinder internal pressure sensor and can more accurately adjust the position of the piston rod 6 on the basis of the actual compression ratio.

Further, in the present comparative example, since the position detection unit 400 is not provided, the variable compression device can be easily installed in the engine system 100.

While preferred embodiment and the comparative example of the present disclosure have been described with reference to the accompanying drawings, the present disclosure is not limited to the embodiment and the comparative example. Shapes, combinations, and the like of the components described in the above-described embodiment and the comparative example are examples and can be modified in various ways on the basis of a request for changing the design without departing from the scope of the present disclosure.

In the embodiment and the comparative example, the position detection unit 400 is provided with the magnetic sensor 410 and the magnetic member 424, but the present disclosure is not limited thereto. The position detection unit 400 may output a signal including positional information of the piston rod 6 by a capacitance sensor. In addition, the position detection unit 400 may include another non-contact type displacement sensor.

Further, in the embodiment and the comparative example, the communication unit 430 performs transmission through wireless communication, but the present disclosure is not limited thereto. The communication unit 430 may be connected to the controller 300 in a wired manner.

In the embodiment and the comparative example, a configuration in which the piston rod 6 is moved using oil pressure to change a compression ratio is adopted. However, the present disclosure is not limited thereto, and may include a configuration in which the piston rod 6 is moved using the pressure of a fluid other than hydraulic oil.

Further, according to the present disclosure, the position detection unit 400 may be a pulse position sensor, a rod including a pulse transmission unit of an optical or ultrasonic pulse type displacement sensor may be provided instead of the rod 421 according to the present invention and the preferred magnetic member 424, and a reception unit of the pulse may be provided in the lid member 7c instead of the magnetic sensor 410. In addition, the position detection unit 400 may detect a position using a laser by a laser generator and a laser reception unit which are provided in the rod 421.

Industrial Applicability

According to the present disclosure, it is possible to accurately adjust a compression ratio in a control device that controls the position of a piston rod of an engine.

Description of Reference Signs

1 Engine
2 Frame
3 Cylinder portion
3a Cylinder liner
3b Cylinder head
3c Cylinder jacket
4 Piston
5 Exhaust valve unit
5a Exhaust valve
5b Exhaust valve casing
5c Exhaust valve driving unit
6 Piston rod
7 Crosshead
7a Crosshead pin
7b Guide shoe
7c Lid member
8 Hydraulic portion (boosting mechanism)
8a Supply pump
8b Oscillating pipe
8c Plunger pump
8c1 Plunger
8c2 Cylinder
8c3 Plunger driving unit
8d First check valve
8e Second check valve
8f Relief valve
8f1 Main body portion
8f2 Relief valve driving unit
8g Boosting pump
9 Connecting rod
10 Crank angle sensor
11 Crank shaft
12 Scavenging reservoir
13 Exhaust reservoir
14 Air cooler
100 Engine system
200 Supercharger
300 Controller
400 Position detection unit (detection unit)
410 Magnetic sensor (sensor portion)
420 Rod portion
421 Rod
422 Holding portion
423 Biasing spring
424 Magnetic member
430 Communication unit (information transmission unit)
H Exhaust port
O Outlet hole
R1 Combustion chamber
R2 Scavenging chamber
R3 Hydraulic chamber (fluid chamber)
R4 Supply flow passage
R5 Relief flow passage

R6 Auxiliary flow passage
S Scavenging port
ε Compression ratio

**Claims**

1.  A variable compression device that is configured to change a compression ratio in a combustion chamber (R1) of an engine (1), the variable compression device comprising:

    a piston rod (6);
    a fluid chamber (R3) which is formed in a crosshead (7) connecting the piston rod (6) to a connecting rod (9), and configured to move the piston rod (6) in a direction in which a compression ratio is increased by supplying a boosted working fluid thereto;
    a boosting mechanism (8) which is configured to boost the working fluid and supplies the boosted working fluid to the fluid chamber (R3);
    a detection unit (400) of which at least a portion is provided to the piston rod (6), and which detects displacement of a position of the piston rod (6) and outputs a signal including positional information of the piston rod (6); and
    a controller (300) which is configured to control the boosting mechanism (8) on the basis of the positional information,
    **characterized in that**
    the detection unit (400) includes a rod (421) that is movably provided in a lid member (7c) of the crosshead (7) into which an end portion of the piston rod (6) is inserted, a biasing portion (423) that presses the rod (421) against a large diameter portion provided in a lower end portion of the piston rod (6), and a sensor portion (410) that is configured to detect movement of the rod (421) in a non-contact manner.

2.  The variable compression device according to claim 1, wherein the rod (421) is disposed in a moving direction of the piston rod (6).

3.  The variable compression device according to claim 1 or 2, wherein

    the detection unit (400) includes a magnetic member (424) provided to the rod (421), and the sensor portion (410) is a magnetic sensor that is configured to detect a change in a magnetic field.

4.  The variable compression device according to any one of claims 1 to 3, further comprising:
    an information transmission unit (430) which is configured to transmit the positional information acquired from the detection unit (400) to the controller (300).

5. An engine system (100) comprising the variable compression device according to any one of claims 1 to 4.

6. A piston-rod position adjustment method of moving a piston rod (6) in a direction in which a compression ratio in a combustion chamber (R1) of an engine (1) is increased by supplying a working fluid to a fluid chamber (R3) formed in a crosshead (7) connecting the piston rod (6) to a connecting rod (9), the piston-rod position adjustment method comprising:

a position acquisition step of acquiring positional information of the piston rod (6) by using a detection unit (400) of which at least a portion is provided to the piston rod (6), and which detects displacement of a position of the piston rod (6); and

a pressure adjustment step of adjusting a pressure of supply of the working fluid on the basis of the positional information,

**characterized in that**

the detection unit (400) includes a rod (421) that is movably provided in a lid member (7c) of the crosshead (7) into which an end portion of the piston rod (6) is inserted, a biasing portion (423) that presses the rod (421) against a large diameter portion provided in a lower end portion of the piston rod (6), and a sensor portion (410) that is configured to detect movement of the rod (421) in a non-contact manner.

7. The piston-rod position adjustment method according to claim 6, wherein the position acquisition step includes calculating a position of the piston rod (6) on the basis of a cylinder internal pressure at a top dead center of the combustion chamber (R1) and a cylinder internal pressure at a bottom dead center of the combustion chamber (R1).

8. The piston-rod position adjustment method according to claim 6, wherein the position acquisition step includes acquiring positional information of the piston rod (6) on the basis of a signal including the positional information acquired by the detection unit (400).

**Patentansprüche**

1. Vorrichtung mit variabler Kompression, die konfiguriert ist, ein Kompressionsverhältnis in einem Brennraum (R1) einer Kraftmaschine (1) zu ändern, wobei die Vorrichtung mit variabler Kompression Folgendes aufweist:

eine Kolbenstange (6);

eine Fluidkammer (R3), die in einem Kreuzkopf (7) ausgebildet ist, der die Kolbenstange (6) mit einer Pleuelstange (9) verbindet, und konfiguriert ist, die Kolbenstange (6) in einer Richtung zu bewegen, in welcher ein Kompressionsverhältnis erhöht wird, indem ein verstärktes Arbeitsfluid dazu zugeführt wird;

einen Verstärkungsmechanismus (8), der konfiguriert ist, das Arbeitsfluid zu verstärken und das verstärkte Arbeitsfluid der Fluidkammer (R3) zuzuführen;

eine Erfassungseinheit (400), von welcher zumindest ein Abschnitt an der Kolbenstange (6) vorgesehen ist, und welche die Verschiebung einer Position der Kolbenstange (6) erfasst und ein Signal ausgibt, das Positionsinformationen der Kolbenstange (6) umfasst; und

eine Steuerungseinrichtung (300), die konfiguriert ist, den Verstärkungsmechanismus (8) auf der Grundlage der Positionsinformationen zu steuern,

**dadurch gekennzeichnet, dass**

die Erfassungseinheit (400) eine Stange (421), die beweglich in einem Deckelbauteil (7c) des Kreuzkopfs (7) vorgesehen ist, in welches ein Endabschnitt der Kolbenstange (6) eingesetzt ist, einen Drängungsabschnitt (423), der die Stange (421) gegen einen Abschnitt mit großem Durchmesser drückt, der in einem unteren Endabschnitt der Kolbenstange (6) vorgesehen ist, und einen Sensorabschnitt (410) hat, der konfiguriert ist, eine Bewegung der Stange (421) auf eine berührungslose Weise zu erfassen.

2. Vorrichtung mit variabler Kompression nach Anspruch 1, wobei die Stange (421) in einer Bewegungsrichtung der Kolbenstange (6) angeordnet ist.

3. Vorrichtung mit variabler Kompression nach Anspruch 1 oder 2, wobei

die Erfassungseinheit (400) ein magnetisches Bauteil (424) hat, das an der Stange (421) vorgesehen ist, und

der Sensorabschnitt (410) ein magnetischer Sensor ist, der konfiguriert ist, eine Änderung in einem Magnetfeld zu erfassen.

4. Vorrichtung mit variabler Kompression nach einem der Ansprüche 1 bis 3, ferner mit: einer Informationsübertragungseinheit (430), welche konfiguriert ist, die durch die Erfassungseinheit (400) erfassten Positionsinformationen an die Steuerungseinrichtung (300) zu übertragen.

5. Kraftmaschine (100), die die Vorrichtung mit variabler Kompression nach einem der Ansprüche 1 bis 4 aufweist.

**6.** Verfahren zur Einstellung einer Kolbenstangenposition zum Bewegen einer Kolbenstange (6) in einer Richtung, in welcher ein Kompressionsverhältnis in einem Brennraum (R1) einer Kraftmaschine (1) erhöht wird, indem ein Arbeitsfluid einer Fluidkammer (R3) zugeführt wird, die in einem Kreuzkopf (7) ausgebildet ist, der die Kolbenstange (6) mit einer Pleuelstange (9) verbindet, wobei das Verfahren zur Einstellung der Kolbenstangenposition Folgendes aufweist:

einen Positionserfassungsschritt des Erfassens von Positionsinformationen der Kolbenstange (6) unter Verwendung einer Erfassungseinheit (400), von welcher zumindest ein Abschnitt an der Kolbenstange (6) vorgesehen ist und welche eine Verschiebung einer Position der Kolbenstange (6) erfasst; und
einen Druckeinstellschritt zum Einstellen eines Drucks der Zufuhr des Arbeitsfluids auf der Grundlage der Positionsinformationen, **dadurch gekennzeichnet, dass**
die Erfassungseinheit (400) eine Stange (421), die beweglich in einem Deckelbauteil (7c) des Kreuzkopfes (7) vorgesehen ist, in welches ein Endabschnitt der Kolbenstange (6) eingesetzt ist, einen Drängungsabschnitt (423), der die Stange (421) gegen einen Abschnitt mit großem Durchmesser drückt, der in einem unteren Endabschnitt der Kolbenstange (6) vorgesehen ist, und einen Sensorabschnitt (410) hat, der konfiguriert ist, eine Bewegung der Stange (421) auf eine berührungslose Weise zu erfassen.

**7.** Verfahren zur Einstellung der Kolbenstangenposition nach Anspruch 6, wobei der Positionserfassungsschritt ein Berechnen einer Position der Kolbenstange (6) auf der Grundlage eines Zylinderinnendrucks an einem oberen Totpunkt des Brennraums (R1) und eines Zylinderinnendrucks an einem unteren Totpunkt des Brennraums (R1) aufweist.

**8.** Verfahren zur Einstellung der Kolbenstangenposition nach Anspruch 6, wobei der Positionserfassungsschritt ein Erfassen von Positionsinformationen der Kolbenstange (6) auf der Grundlage eines Signals einschließlich der durch die Erfassungseinheit (400) erfassten Positionsinformationen aufweist.

**Revendications**

**1.** Dispositif de compression variable qui est configuré pour modifier un rapport de compression dans une chambre de combustion (R1) d'un moteur (1), le dispositif de compression variable comprenant :

une tige de piston (6) ;
une chambre de fluide (R3) qui est formée dans une traverse (7) raccordant la tige de piston (6) à une tige de raccordement (9) et configurée pour déplacer la tige de piston (6) dans une direction dans laquelle un rapport de compression est augmenté en fournissant un fluide de travail amplifié à cette dernière ;
un mécanisme d'amplification (8) qui est configuré pour amplifier le fluide de travail et fournit le fluide de travail amplifié à la chambre de fluide (R3) ;
une unité de détection (400) dont au moins une partie est prévue sur la tige de piston (6) et qui détecte le déplacement d'une position de la tige de piston (6) et émet un signal comprenant une information positionnelle de la tige de piston (6) ; et
un organe de commande (300) qui est configuré pour commander le mécanisme d'amplification (8) sur la base de l'information positionnelle, **caractérisé en ce que** :
l'unité de détection (400) comprend une tige (421) qui est prévue, de manière mobile, dans un élément de couvercle (7c) de la traverse (7) dans laquelle une partie d'extrémité de la tige de piston (6) est insérée, une partie de sollicitation (423) qui comprime la tige (421) contre une partie de grand diamètre prévue dans une partie d'extrémité inférieure de la tige de piston (6), et une partie de capteur (410) qui est configurée pour détecter le mouvement de la tige (421) d'une manière sans contact.

**2.** Dispositif de compression variable selon la revendication 1, dans lequel la tige (421) est disposée dans une direction de déplacement de la tige de piston (6).

**3.** Dispositif de compression variable selon la revendication 1 ou 2, dans lequel :

l'unité de détection (400) comprend un élément magnétique (424) prévu sur la tige (421), et
la partie de capteur (410) est un capteur magnétique qui est configurée pour détecter un changement dans un champ magnétique.

**4.** Dispositif de compression variable selon l'une quelconque des revendications 1 à 3, comprenant en outre :
une unité de transmission d'information (430) qui est configurée pour transmettre l'information positionnelle acquise par l'unité de détection (400) à l'organe de commande (300).

**5.** Système de moteur (100) comprenant le dispositif de compression variable selon l'une quelconque des revendications 1 à 4.

**6.** Procédé de réglage de position de tige de piston pour déplacer une tige de piston (6) dans une direction dans laquelle un rapport de compression dans une chambre de combustion (R1) d'un moteur (1) est augmenté en fournissant un fluide de travail à une chambre de fluide (R3) formée dans une traverse (7) raccordant la tige de piston (6) à une tige de raccordement (9), le procédé de réglage de position de tige de piston comprenant :

une étape d'acquisition de position pour acquérir l'information positionnelle de la tige de piston (6) en utilisant une unité de détection (400) dont au moins une partie est prévue sur la tige de piston (6), et qui détecte le déplacement d'une position de la tige de piston (6) ; et
une étape de réglage de pression pour régler une pression d'alimentation du fluide de travail sur la base de l'information positionnelle,
**caractérisé en ce que** :
l'unité de détection (400) comprend une tige (421) qui est prévue, de manière mobile, dans un élément de couvercle (7c) de la traverse (7) dans laquelle une partie d'extrémité de la tige de piston (6) est insérée, une partie de sollicitation (423) qui comprime la tige (421) contre une partie de grand diamètre prévue dans une partie d'extrémité inférieure de la tige de piston (6), et une partie de capteur (410) qui est configurée pour détecter le mouvement de la tige (421) d'une manière sans contact.

**7.** Procédé de réglage de position de tige de piston selon la revendication 6, dans lequel l'étape d'acquisition de position comprend l'étape pour calculer une position de la tige de piston (6) sur la base d'une pression interne de cylindre à un point mort haut de la chambre de combustion (R1) et une pression interne de cylindre à un point mort bas de la chambre de combustion (R1).

**8.** Procédé de réglage de position de tige de piston selon la revendication 6, dans lequel l'étape d'acquisition de position comprend l'étape pour acquérir l'information positionnelle de la tige de piston (6) sur la base d'un signal comprenant l'information positionnelle acquise par l'unité de détection (400).

# FIG. 1

# FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014020375 A
- EP 3098416 A
- CN 106089977 A
- FR 3043720 A1